# EUROPÄISCHE PATENTSCHRIFT

(11) **EP 3 556 088 B1**
(45) Veröffentlichungstag und Bekanntmachung des Hinweises auf die Patenterteilung: **02.12.2020**
(21) Anmeldenummer: 17828855.1
(22) Anmeldetag: 07.12.2017
(51) Int. Cl.: H04N 5/262

(54) **VERFAHREN UND VORRICHTUNG ZUR ERMITTLUNG DER SCHNITTKANTEN VON ZWEI SICH ÜBERLAPPENDEN BILDAUFNAHMEN EINER OBERFLÄCHE**
METHOD AND DEVICE FOR DETERMINING INTERSECTIONS BETWEEN TWO OVERLAPPING IMAGES OF A SURFACE
MÉTHODE ET APPAREIL POUR DÉTERMINER DES INTERSECTION ENTRE DEUX IMAGES D'UNE SURFACE QUI SE CHEVAUCHENT

(30) Priorität: 13.12.2016 DE 102016224886
(43) Veröffentlichungstag der Anmeldung: 23.10.2019
(73) Patentinhaber: Deutsches Zentrum für Luft- und Raumfahrt e.V., 51147 Köln (DE)
(72) Erfinder: HEIN, Daniel, 13187 Berlin (DE)
(74) Vertreter: Zucker, Volker
(86) Internationale Anmeldenummer: PCT/EP2017/081913
(87) Internationale Veröffentlichungsnummer: WO 2018/108711

(56) Entgegenhaltungen:
- EP-A1- 2 787 319

## Beschreibung

Die Erfindung betrifft ein Verfahren und eine Vorrichtung zur Ermittlung der Schnittkanten von zwei sich überlappenden Bildaufnahmen einer Oberfläche.

Für verschiedene Anwendungen insbesondere im Bereich der luftgestützten Erdfernerkundung gewinnen Echtzeitdatenübertragungen der Sensordaten sowie eine Visualisierung bzw. Auswertung der übertragenen Daten schon während der Befliegung an Bedeutung.

Heutige Sensoren und Kameras generieren während einer Aufnahme einen hohen Datenstrom, der in der Regel in Größenordnungen umfangreicher ist als aktuelle Funkstrecken, vor allem über größere Distanzen von einem Flugzeug zu einer Bodenstation übertragen können. Für eine Echtzeit-Übertragung solcher Sensordaten ist daher in der Regel eine Datenreduktion auf der Senderseite erforderlich. Gleichzeitig besitzen die aufgenommenen Sensordaten einer Befliegung abhängig von Flughöhe, Fluggeschwindigkeit, Öffnungswinkel und Auslösefrequenz der Sensoren eine teilweise hohe Überlappung bezüglich der pro Luftbild erfassten Oberflächensegmente, die auch als Footprints bezeichnet werden. Durch Ermittlung von geeigneten Schnittkanten der Bildaufnahmen könnte dann ein Teil der Bilddaten als redundant verworfen werden und muss nicht übertragen werden.

Dabei stellen sich aber praktisch einige Probleme. So sind die oben genannten Parameter nicht konstant, was dazu führt, dass die Überlappung nicht konstant ist. Verschärft wird dieses Problem, wenn sich die Orientierung der Kamera, also deren Lage im Raum, zwischen den Bildaufnahmen ändert.

Das Problem der optimalen Schnittkanten stellt sich dabei nicht nur im Echtzeitbetrieb, sondern generell wenn Luftbildaufnahmen mit Überlappung schnell zu einem Gesamtbild, einem sogenannten Luftbildmosaik, zusammengesetzt werden sollen.

Aus der EP 2 787 319 A1 ist ein Verfahren zur Luftbilderfassung mit einem unbemannten und steuerbaren Fluggerät mit Kamera bekannt, wobei während einer Flugbewegung des Fluggerätes fortlaufend eine Kameraposition und eine Ausrichtung einer optischen Kameraachse bestimmt werden. Dabei wird eine Luftbildserie erfasst. Dabei wird für jedes Luftbild der Luftbildserie das Erfassen des jeweiligen Luftbildes ausgelöst beim Durchfliegen eines jeweiligen Bildauslösebereiches mit dem Fluggerät, wobei die Lage des jeweiligen Bildauslösebereichs zumindest durch jeweils eine dem jeweiligen Bildauslösebereich zugeordnete Auslöseposition in einem Flugplan bestimmt ist, und in Abhängigkeit von der Ausrichtung der optischen Kameraachse beim Durchfliegen des jeweiligen Bildauslösebereichs hinsichtlich eines Erfüllens einer definierten Maximal-Winkelabweichung bezüglich einer vorbestimmten Raumausrichtung für die Kameraachse.

Der Erfindung liegt daher das technische Problem zugrunde, ein Verfahren zur Ermittlung der Schnittkanten von zwei sich überlappenden Bildaufnahmen einer Oberfläche zur Verfügung zu stellen, das eine möglichst hohe Datenreduktion ohne Informationsverlust (also ohne Lücken im Luftbildmosaik) gewährleistet, sowie eine hierfür geeignete Vorrichtung zu schaffen.

Die Lösung des technischen Problems ergibt sich durch ein Verfahren mit den Merkmalen des Anspruchs 1 sowie eine Vorrichtung mit den Merkmalen des Anspruchs 5. Weitere vorteilhafte Ausgestaltungen der Erfindung ergeben sich aus den Unteransprüchen.

Das Verfahren zur Ermittlung der Schnittkanten von zwei sich überlappenden Bildaufnahmen einer Oberfläche, die mittels einer oder mehrerer Kameras mit matrixförmigen Sensoren aufgenommen werden, erfolgt mittels eines Höhenmodells der Oberfläche, der Projektionsmodelle aller an den Bildaufnahmen beteiligten Kameras sowie eines Positions- und Lagemesssystems. Das Höhenmodell beschreibt dabei für jede Koordinate sowohl die Höhe als auch zu jedem beliebigen Strahl im Raum den Schnittpunkt mit dem Höhenmodell als räumlichen Punkt. Das Projektionsmodell einer Kamera kann zu jedem Bildpunkt einer mit dieser Kamera aufgenommenen Bildaufnahme dessen Raumwinkel beschreiben (Vorwärtsprojektion) als auch zu einem beliebigen räumlichen Weltpunkt den dazugehörigen Bildpunkt auf der Sensoroberfläche beschreiben (Rückwärtsprojektion). Das Projektionsmodell wird dabei mit Hilfe der inneren Kameraparameter definiert, wobei in das Modell auch die jeweils aktuelle äußere Orientierung (also Position und Lage zum Aufnahmezeitpunkt) der Kamera eingeht. Diese sechs Freiheitsgrade (drei translatorische und drei rotatorische Freiheitsgrade) werden durch das Positions- und Lagemesssystem zur Verfügung gestellt. Dabei sind verschiedene Ausbildungen für ein solches Positions- und Lagemesssystem bekannt.

In einem ersten Schritt werden die Positionsdaten der Kamera der ersten Bildaufnahme und der Kamera der zweiten Bildaufnahme ermittelt. Es kann sich dabei ohne Einschränkungen um ein und dieselbe Kamera handeln, die zwischen den Aufnahmen bewegt wurde, es kann sich aber ebenso um Aufnahmen aus zwei verschiedenen Kameras handeln. Dabei wird vorzugsweise ein definierter Punkt bezüglich der Kamera(s) ausgewählt, dessen räumliche Koordinate zum Zeitpunkt der Aufnahme ermittelt wird. Dies kann beispielsweise die Position des Brennpunkts der Kamera zum Zeitpunkt der Aufnahme sein. Weiter wird der räumliche Mittelpunkt zwischen den beiden Positionsdaten ermittelt und eine senkrechte Projektion dieses Mittelpunktes auf die Oberfläche unter Berücksichtigung des Höhenmodells durchgeführt. Dadurch wird ein Punkt auf der Oberfläche ermittelt. Mittels des Projektionsmodells wird für diesen Punkt einmal in die Sensorebene der Kamera in der ersten Kameraposition und einmal in die Sensorebene der Kamera in der zweiten Kameraposition der jeweils zugehörige Bildpunkt ermittelt. Dabei sei angemerkt, dass, wenn die beiden Bildaufnahmen durch unterschiedliche Kameras aufgenommen werden, das jeweilige kameraspezifische Projektionsmodell verwendet werden muss. Als nächster Schritt wird die jeweilige Zeile des Sensors ermittelt, in dem der Bildpunkt liegt. Dabei sei angenommen, dass in der ersten Kameraposition die Z1M0-te-Zeile und in der zweiten Kameraposition die Z2M0-te Zeile den Bildpunkt aufweist. Weiter sei angenommen, dass die Zeilen quer zur Flugrichtung angeordnet sind. Würde keine relative Rotation - also lediglich eine translatorische Änderung - in der Lage zwischen den beiden Kamerapositionen bestehen, und wäre die Oberfläche im überlappenden Bereich eben, so wäre dies bereits das Ergebnis, d.h. die Daten von der ersten Zeile bis zur (Z1M0-1)-ten Zeile (die ersten Z1M0-1 Zeilen im oberen Bildbereich) von der ersten Kameraposition und die Daten der (Z2M0+1)-ten bis zur n-ten Zeile (die letzten n-(Z2M0+1) Zeilen im unteren Bildbereich) der zweiten Kameraposition können verworfen werden.

Allerdings kann es z.B. durch Rotationen (wenn z.B. das Flugzeug in einer Kurve fliegt), oder durch die Struktur des erfassten Geländes (also der Struktur des Höhenmodells) dazu kommen, dass dann zwischen den beiden so entstandenen Footprints Lücken entstehen. Dies wird durch die nachfolgenden Verfahrensschritte kompensiert. Hierzu werden vier Raumwinkel für den ersten und letzten Bildpunkt der jeweils bestimmten Zeilen (Z1M0 für die erste Kameraposition und Z2M0 für die zweite Kameraposition) des Sensors mit Hilfe des Projektionsmodells bestimmt und die vier Schnittpunkte dieser vier Raumwinkel mit dem Höhenmodell ermittelt - diese vier Punkte auf dem Höhenmodell entsprechen den durch die beiden ermittelten Sensorzeilen Z1M0 und Z2M0 äußeren erfassten Oberflächenpunkten. Anschließend werden horizontale Mittelpunkte unter Berücksichtigung des Höhenmodells zwischen den beiden Schnittpunkten für die ersten Bildpunkte der Zeilen und die letzten Bildpunkte der Zeilen ermittelt - bildlich gesprochen also die Mittelpunkte auf dem Höhenmodell zwischen den beiden äußeren linken und den beiden äußeren rechten erfassten Oberflächenpunkten. Anschließend werden diese beiden so bestimmten Mittelpunkte unter Berücksichtigung der Projektionsmodelle zurück in die beiden Sensorebenen (also dem Sensor für die erste Kameraposition und dem Sensor für die zweite Kameraposition) projiziert - man erhält also pro Sensor die zu den beiden Mittelpunkten auf der Oberfläche dazugehörigen zwei Bildpunkte. Zu diesen Bildpunkten werden die Zeilennummern betrachtet. Im allgemeinen Fall liegen die Bildpunkte in den beiden Sensorebenen nicht in derselben Zeile, die Zeilennummern sind also verschieden. Nun wird für die erste Kameraposition die kleinste ermittelte und für die zweite Kameraposition die größte ermittelte Zeile als (neue) Schnittkante gewählt. Das Ergebnis liefert dann zwei Footprints ohne Lücke auch bis zu den Rändern hin, wobei die Anzahl redundanter Daten minimiert ist.

Vorzugsweise werden die beiden Bildaufnahmen zeitlich versetzt durch eine Kamera aufgenommen.

In einer weiteren Ausführungsform werden die Schnittkanten on-board eines Trägersystems der Kamera, beispielsweise einem Flugzeug, ermittelt, wobei dann weiter vorzugsweise die so reduzierten Daten der Bildaufnahmen in Echtzeit an eine Zentrale (z.B. eine Bodenstation) übermittelt werden. Für die Datenübertragung können dann weitere Datenkompressionsverfahren zur Anwendung kommen.

Die Erfindung wird nachfolgend anhand eines bevorzugten Ausführungsbeispiels näher erläutert. Die Figuren zeigen:
- Fig. 1: ein schematisches Blockschaltbild einer Vorrichtung zur Ermittlung der Schnittkanten von zwei sich überlappenden Bildaufnahmen einer Oberfläche,
- Fig. 2: eine schematische Darstellung der Aufnahmeposition,
- Fig. 3: eine schematische Draufsicht auf einen Sensor in einer ersten und zweiten Kameraposition,
- Fig. 4: eine schematische Darstellung von vier Raumwinkeln und
- Fig. 5: eine weitere schematische Draufsicht auf den Sensor in der ersten und zweiten Kameraposition.

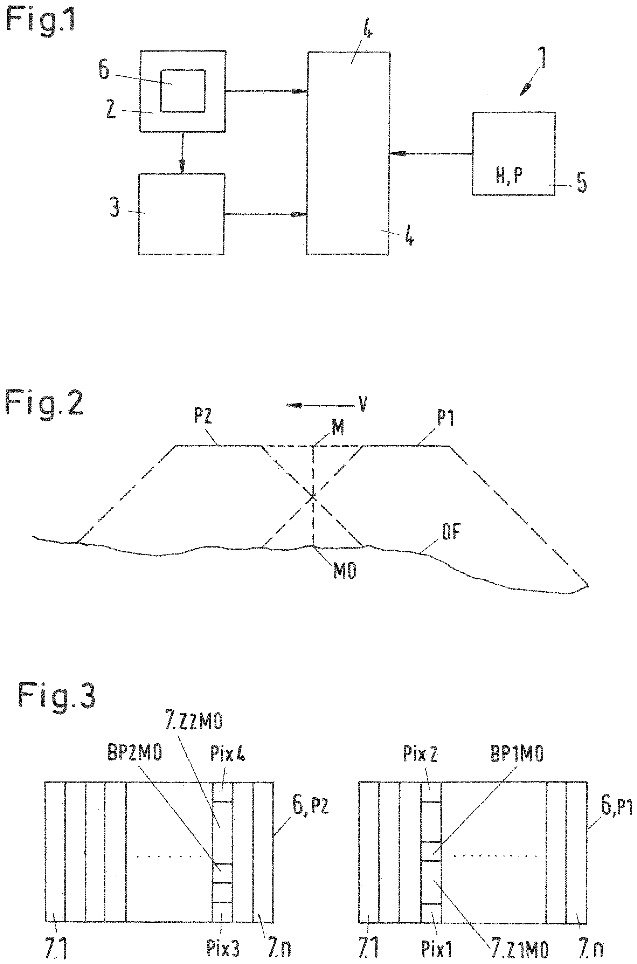

In der Fig. 1 ist ein schematisches Blockschaltbild einer Vorrichtung 1 zur Ermittlung der Schnittkanten von zwei sich überlappenden Bildaufnahmen einer Oberfläche dargestellt, die eine Kamera 2, ein Positions- und Lagemesssystem 3, eine Auswerteeinheit 4 sowie einen Speicher 5 aufweist. Die Kamera 2 weist einen matrixförmigen Sensor 6 auf. Das Positions- und Lagemesssystem 3 ist dabei mit der Kamera 2 synchronisiert, sodass zu jeder Bildaufnahme die aktuellen Positions- und Lagedaten erfasst werden. In dem Speicher ist ein Höhenmodell H der Oberfläche und ein Projektionsmodell P der Kamera abgelegt.

Die Arbeitsweise der Vorrichtung 1 soll nun anhand der nachfolgenden Figuren erläutert werden. Dabei ist in Fig. 2 schematisch eine Situation dargestellt, wo die Kamera 2 zu einem ersten Zeitpunkt t1 an einer ersten Kameraposition P1 (x1, y1, z1, α1, β1, γ1) eine erste Bildaufnahme der Oberfläche OF macht. Die Kamera 2 bzw. Vorrichtung 1 ist beispielsweise an einem Flugzeug montiert und bewegt sich mit der Geschwindigkeit V fort. Zu einem zweiten Zeitpunkt t2 befindet sich die Kamera 2 an einer zweiten Kameraposition P2 (x2, y2, z2, α2, β2, γ2) und macht eine zweite Bildaufnahme. Dabei sind gestrichelt die "field of views" der Kamera 2 dargestellt, wobei erkennbar ist, dass sich die beiden Bildaufnahmen überlappen. Die Auswerteeinheit 3 ermittelt nun einen horizontalen Mittelpunkt M zwischen der ersten Kameraposition P1 und der zweiten Kameraposition P2, wobei anschließend dieser Mittelpunkt M senkrecht auf das Höhenmodell H der Oberfläche OF projiziert wird. Als Ergebnis erhält man einen Punkt M0 auf dem Höhenmodell. Für diesen Punkt M0 wird nun der zugehörige Bildpunkt BP1M0 auf dem Sensor 6 in der ersten Kameraposition P1 und der Bildpunkt BP2M0 auf dem Sensor 6 in der zweiten Kameraposition P2 ermittelt (siehe auch Fig. 3). Dabei sei angenommen, dass der Sensor 6 n Zeilen 7 aufweist, wobei die erste Zeile 7.1 in Flugrichtung am weitesten vorn und die letzte Zeile 7.n am weitesten hinten ist. Dabei sei angenommen, dass der Bildpunkt BP1M0 in der Z1M0-ten Zeile 7.Z1M0 und der Bildpunkt BP2M0 auf der Z2M0-ten Zeile 7.Z2M0 ist. Für eine ebene Oberfläche und ohne relative Rotationen zwischen Kameraposition P1 und P2 (also α1= α2, β1= β2, γ1= γ2) wären dies die Schnittkanten, d.h. die Daten der 7.1 bis 7.Z1M0-1-ten Zeile in der ersten Kameraposition und die Daten der 7.Z2M0+1 bis 7.n-ten Zeile in der zweiten Kameraposition P2 würden verworfen bzw. weggeschnitten werden.

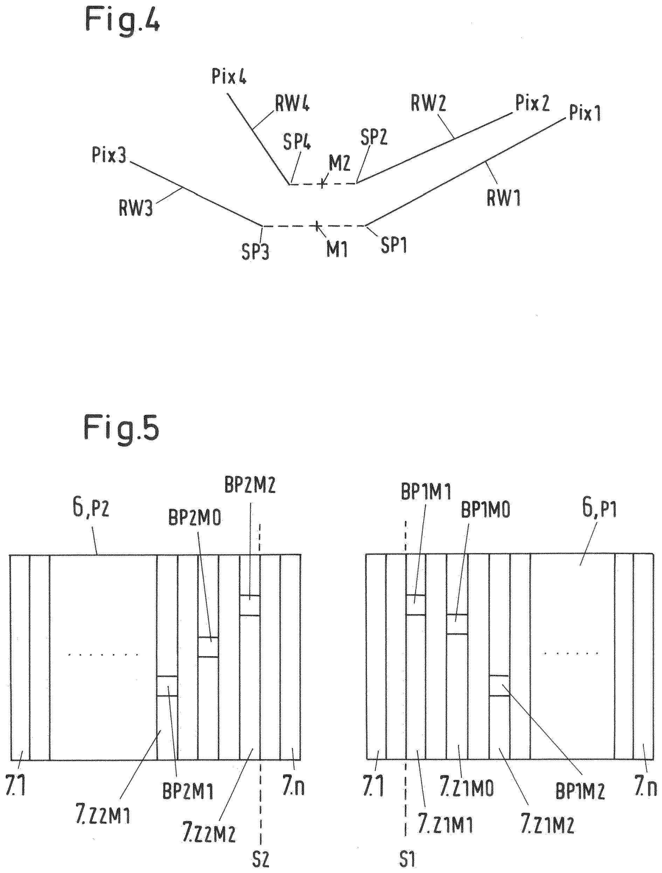

Im allgemeinen Fall, also wenn die Oberfläche im Überlappungsbereich nicht eben und/oder zusätzliche ein relative Rotation zwischen P1 und P2 vorliegt (also α1≠α2 oder β1≠β2 oder γ1≠γ2), können Lücken zwischen den beiden im vorigen Schritt ermittelten Footprints auftreten. Um diese Lücken zu schließen, werden von dem ersten Pixel Pix1 und dem letzten Pixel Pix2 der Z1M0-ten Zeile und dem ersten Pixel Pix3 und dem letzten Pixel Pix4 der Z2M0-ten Zeile die vier Raumwinkel RW1-RW4 mittels des Projektionsmodells P bestimmt und die vier Schnittpunkte SP1-4 mit der Oberfläche OF unter Berücksichtigung des Höhenmodells H ermittelt. Für die Strecke zwischen den Schnittpunkten SP1 und SP3 sowie SP2 und SP4 wird jeweils der horizontale Mittelpunkt M1, M2 auf dem Höhenmodell H bestimmt (siehe Fig. 4). Für die beiden nun so ermittelten Mittelpunkte M1, M2 werden dann wieder die dazugehörigen Bildpunkte BP1M1 und BP1M2 auf dem Sensor 6 in der ersten Kameraposition P1 und die Bildpunkte BP2M1 und BP2M2 auf dem Sensor 6 in der zweiten Kameraposition P2 mittels des Projektionsmodells P ermittelt.

Nun liegen für jede Kameraposition je drei Bildpunkte vor, für die Kameraposition 1 die Bildpunkte BP1M0, BP1M1, BP1M2, und für die Kameraposition 2 die Bildpunkte BP2M0, BP2M1, BP2M2. Im Folgenden werden nun die zu diesen Bildpunkten dazugehörigen Zeilennummern Z1M0,Z1M1,Z1M2 und Z2M0,Z2M1,Z2M2 betrachtet. Für die Schnittkante für die erste Kameraposition P1 wird nun die Zeile 7.MIN1 mit der kleinsten Zeilennummer MIN1 = Minimum der Zeilennummern (Z1M0,Z1M1,Z1M2) gewählt, entsprechend wird für die zweite Kameraposition P2 die Zeile 7.MAX2 mit der größten Zeilennummer MAX2 = Maximum der Zeilennummern (Z2M0,Z2M1,Z2M2) gewählt. Durch diese Verschiebung der Schnittkanten S1, S2 nach "vorn" (in Flugrichtung) für die erste Kameraposition P1 sowie nach "hinten" für die zweite Kameraposition P2 ist sichergestellt, dass die beiden so erhaltenen Footprints ohne Lücke aneinander anschließen, wobei die Datenmenge minimiert ist.

Das Verfahren wählt für jeden erfassten Oberflächenpunkt des beflogenen Gebietes das Luftbild und den Bildbereich aus, der diesen Oberflächenpunkt mit der geringsten Neigung erfasst hat. Hierdurch wird zum einen die beste Draufsicht auf das beflogene Gebiet sichergestellt, zum anderen werden mögliche Vorsätze durch Ungenauigkeiten bei der Echtzeitprojektion (bedingt durch Ungenauigkeiten im eingesetzten Höhenmodell, Messfehler in dem Positions- und Lagemesssystem sowie Fehler im Projektionsmodell) minimiert.

Das Verfahren ist für alle Kameras mit matrixförmigen Sensoren geeignet, also MatrixKameras oder aber auch abbildende Spektrometer.

## Patentansprüche

1. Verfahren zur Ermittlung der Schnittkanten (S1, S2) von zwei sich überlappenden Bildaufnahmen einer Oberfläche (OF), wobei die Bildaufnahmen mittels mindestens einer Kamera (2) aufgenommen werden, wobei die mindestens eine Kamera (2) einen matrixförmigen Sensor (6) mit n-Zeilen (7) aufweist, wobei eine Schnittkante eine Zeile des matrixförmigen Sensors darstellt, wobei Daten von Zeilen ober- oder unterhalb der Schnittkante als redundant verworfen werden, umfassend folgende Verfahrensschritte:
- mittels eines Positions- und Lagemesssystems (3) werden die Kamerapositionen (P1, P2) der mindestens einen Kamera (2) bei der ersten Bildaufnahme und der zweiten Bildaufnahme ermittelt,
- ein horizontaler Mittelpunkt (M) zwischen den beiden Kamerapositionen (P1, P2) wird ermittelt und eine senkrechte Projektion dieses Mittelpunktes (M) auf die Oberfläche (OF) unter Berücksichtigung eines vorab abgelegten Höhenmodells (H) der Oberfläche (OF) durchgeführt, sodass ein Punkt (M0) ermittelt wird, wobei das Höhenmodell zu jeder Koordinate eine Höhe beschreibt, sodass für jede Koordinate sowohl die Höhe als auch zu jedem beliebigen Strahl im Raum ein Schnittpunkt mit dem Höhenmodell als räumlicher Punkt ermittelt werden kann,
- mittels eines Projektionsmodells (P) der mindestens einen Kamera (2) werden die Bildpunkte (BP1M0, BP2M0) des Punktes (M0) in dem Sensor (6) für die erste Kameraposition (P1) und die zweite Kameraposition (P2) unter Berücksichtigung der Daten des Positions- und Lagemesssystems (3) ermittelt, wobei das Projektionsmodell einer Kamera zu jedem Bildpunkt einer mit dieser Kamera aufgenommenen Bildaufnahme dessen Raumwinkel beschreiben kann als auch zu einem beliebigen räumlichen Weltpunkt den dazugehörigen Bildpunkt auf der Sensoroberfläche beschreiben kann,
- Bestimmen der jeweiligen Zeile (7.Z1 M0, 7.Z2M0) des Sensors (6), in der der jeweilige Bildpunkt (BP1M0, BP2M0) liegt,
- Bestimmen der vier Raumwinkel (RW1-RW4) des ersten und letzten Bildpunktes (Pix1, Pix2; Pix3, Pix4) der jeweils bestimmten Zeile (7.Z1 M0, 7.Z2M0) des Sensors (6) mit Hilfe des Projektionsmodells (P) und Ermitteln der vier Schnittpunkte (SP1-SP4) der vier Raumwinkel (RW1-RW4) mit dem Höhenmodell (H),
- Bestimmen des horizontalen Mittelpunktes (M1) unter Berücksichtigung des Höhenmodells (H) zwischen den beiden Schnittpunkten (SP1, SP3) für die ersten Bildpunkte (Pix1, Pix3) der Zeilen (7.Z1MO, 7.Z2MO) und Bestimmen des horizontalen Mittelpunktes (M2) unter Berücksichtigung des Höhenmodells (H) zwischen den beiden Schnittpunkten (SP2, SP4) für die letzten Bildpunkte (Pix2, Pix4) der Zeilen (7.Z1MO, 7.Z2MO),
- Ermitteln der beiden Bildpunkte (BP1M1, BP1M2) der beiden Mittelpunkte (M1, M2) in dem Sensor (6) für die erste Kameraposition (P1) und der beiden Bildpunkte (BP2M1,BP2M2) in dem Sensor (6) für die zweite Kameraposition (P2) mittels des Projektionsmodells (P),
- Bestimmen der zugehörigen Zeilen (7.Z1M1; 7.Z1M2) und (7.Z2M1, 7.Z2M2) der Bildpunkte (BP1M1, BP1M2) und (BP2M1, BP2M2) der beiden Mittelpunkte (M1, M2),
wobei für die erste Kameraposition (P1) die kleinste ermittelte Zeile bezüglich der Zeilennummer MIN1, wobei MIN1 das Minimum von Z1M0, Z1M1, Z1M2 ist, und für die zweite Kameraposition (P2) die größte ermittelte Zeile bezüglich der Zeilennummer MAX2, wobei MAX2 das Maximum von Z2M0, Z2M1, Z2M2 ist, die Schnittkanten (S1, S2) bilden.

2. Verfahren nach Anspruch 1, **dadurch gekennzeichnet, dass** die beiden Bildaufnahmen zeitlich versetzt durch eine Kamera (2) aufgenommen werden.

3. Verfahren nach Anspruch 2, **dadurch gekennzeichnet, dass** die Ermittlung der Schnittkanten (S1, S2) on-board eines Trägersystems der Kamera (2) erfolgt.

4. Verfahren nach Anspruch 3, **dadurch gekennzeichnet, dass** die mittels der Schnittkanten (S1, S2) reduzierten Daten der Bildaufnahmen in Echtzeit an eine Zentrale übermittelt werden.

5. Vorrichtung (1) zur Ermittlung der Schnittkanten (S1, S2) von zwei sich überlappenden Bildaufnahmen einer Oberfläche (OF), umfassend mindestens eine Kamera (2) mit einem matrixförmigen Sensor (6), der n Zeilen (7) aufweist, ein Positions- und Lagemesssystem (3), eine Auswerteeinheit (4) und einen Speicher (5), wobei in dem Speicher (5) ein Höhenmodell (H) der Oberfläche (OF) und ein Projektionsmodell (P) der Kamera (2) abgelegt sind, auf die die Auswerteeinheit (4) zugreifen kann, wobei das Projektionsmodell einer Kamera zu jedem Bildpunkt einer mit dieser Kamera aufgenommenen Bildaufnahme dessen Raumwinkel beschreiben kann als auch zu einem beliebigen räumlichen Weltpunkt den dazugehörigen Bildpunkt auf der Sensoroberfläche beschreiben kann, wobei das Höhenmodell zu jeder Koordinate eine Höhe beschreibt, sodass für jede Koordinate sowohl die Höhe als auch zu jedem beliebigen Strahl im Raum ein Schnittpunkt mit dem Höhenmodell als räumlicher Punkt ermittelt werden kann, wobei die Vorrichtung (1) derart ausgebildet ist, dass mittels des Positions- und Lagemesssystems (3) die Kameraposition (P1, P2) der mindestens einen Kamera (2) bei der ersten und zweiten Bildaufnahme ermittelt werden, wobei ein horizontaler Mittelpunkt (M) zwischen den beiden Kamerapositionen (P1, P2) ermittelt wird und eine senkrechte Projektion des Mittelpunktes (M) auf die Oberfläche (OF) unter Berücksichtigung des Höhenmodells (H) durchgeführt wird, wobei für den so ermittelten Punkt (M0) mittels des Projektionsmodells (P) eine Rückprojektion auf den Sensor (6) in der ersten und zweiten Kameraposition (P1, P2) durchgeführt und jeweils ein Bildpunkt (BP1M0, BP2M0) ermittelt wird, wobei die jeweilige Zeile (7.Z1M0, 7.Z2M0) des Sensors (6) ermittelt wird, in der der jeweilige Bildpunkt (BP1MO, BP2MO) liegt, wobei vier Raumwinkel (RW1-RW4) des jeweils ersten und letzten Bildpunktes (Pix1-Pix4) der jeweils bestimmten Zeilen (7.Z1 M0, 7.Z2M0) des Sensors (6) mit Hilfe des Projektionsmodells (P) bestimmt und deren Schnittpunkte (SP1-SP4) mit dem Höhenmodell (H) zwischen den beiden Schnittpunkten (SP1, SP3; SP2, SP4) für die ersten Bildpunkte (Pix1, Pix3) der Zeilen (7.Z1M0, 7.Z2M0) und die letzten Bildpunkte (Pix2, Pix4) der Zeilen (7.Z1M0, 7.Z2M0) bestimmt werden, wobei zwei Bildpunkte (BP1M1, BP1M2) der beiden Mittelpunkte (M1, M2) in dem Sensor (6) für die erste Kameraposition (P1) und zwei Bildpunkte (BP2M1,BP2M2) der beiden Mittelpunkte (M1,M2) in dem Sensor (6) für die zweite Kameraposition (P2) mittels des Projektionsmodells (P) ermittelt und zugehörige Zeilen (7.Z1M1, 7.Z1M2) der Bildpunkte (BP1M1, BP1M2) für die Kameraposition (P1) und zugehörige Zeilen (7.Z2M1, 7.Z2M2) der Bildpunkte (BP2M1,BP2M2) der beiden Mittelpunkte (M1, M2) für die Kameraposition (P2) bestimmt werden, wobei für die erste Kameraposition (P1) die kleinste ermittelte Zeile bezüglich der Zeilennummer MIN1, wobei MIN1 das Minimum von Z1M0, Z1M1, Z1M2 ist, und für die zweite Kameraposition (P2) die größte ermittelte Zeile bezüglich der Zeilennummer MAX2, wobei MAX2 das Maximum von Z2M0, Z2M1, Z2M2 ist, als Schnittkante (S1, S2) gewählt werden.

## Claims

1. Method for ascertaining the cut edges (S1, S2) of two overlapping photographs of a surface (OF), wherein the photographs are taken by means of at least one camera (2), wherein the at least one camera (2) has a sensor (6) in matrix form having n rows (7), wherein a cut edge represents a row of the sensor in matrix form, wherein data from rows above or below the cut edge are rejected as redundant, comprising the following method steps:
- a position and orientation measuring system (3) is used to ascertain the camera positions (P1, P2) of the at least one camera (2) for the first photograph and the second photograph,
- a horizontal midpoint (M) between the two camera positions (P1, P2) is ascertained and a perpendicular projection of this midpoint (M) onto the surface (OF) is performed while taking into consideration a previously stored height model (H) of the surface (OF), with the result that a point (M0) is ascertained, wherein the height model describes a height for each coordinate, so that for each coordinate it is possible for both the height and, for any ray in the space, a point of intersection with the height model to be ascertained as a spatial point,
- a projection model (P) of the at least one camera (2) is used to ascertain the picture elements (BP1M0, BP2M0) of the point (M0) in the sensor (6) for the first camera position (P1) and the second camera position (P2) while taking into consideration the data of the position and orientation measuring system (3), wherein for each picture element of a photograph taken with a camera the projection model of this camera can describe the solid angle of said picture element and, for any spatial world point, the associated picture element on the sensor surface,
- determining the respective row (7.Z1M0, 7.Z2M0) of the sensor (6) in which the respective picture element (BP1M0, BP2M0) is located,
- determining the four solid angles (RW1-RW4) of the first and last picture elements (Pix1, Pix2; Pix3, Pix4) of the respectively determined row (7.Z1M0, 7.Z2M0) of the sensor (6) by using the projection model (P) and ascertaining the four points of intersection (SP1-SP4) of the four solid angles (RW1-RW4) with the height model (H),
- determining the horizontal midpoint (M1) while taking into consideration the height model (H) between the two points of intersection (SP1, SP3) for the first picture elements (Pix1, Pix3) of the rows (7.Z1MO, 7.Z2MO) and determining the horizontal midpoint (M2) while taking into consideration the height model (H) between the two points of intersection (SP2, SP4) for the last picture elements (Pix2, Pix4) of the rows (7.Z1MO, 7.Z2MO),
- ascertaining the two picture elements (BP1M1, BP1M2) of the two midpoints (M1, M2) in the sensor (6) for the first camera position (P1) and the two picture elements (BP2M1, BP2M2) in the sensor (6) for the second camera position (P2) by means of the projection model (P),
- determining the associated rows (7.Z1M1; 7.Z1M2) and (7.Z2M1, 7Z2M2) of the picture elements (BP1M1, BP1M2) and (BP2M1, BP2M2) of the two midpoints (M1, M2),
wherein for the first camera position (P1) the smallest ascertained row in respect of the row number MIN1, where MIN1 is the minimum from Z1M0, Z1M1, Z1M2, and for the second camera position (P2) the largest ascertained row in respect of the row number MAX2, where MAX2 is the maximum from Z2M0, Z2M1, Z2M2, form the cut edges (S1, S2)

2. Method according to Claim 1, **characterized in that** the two photographs are taken by a camera (2) at staggered times.

3. Method according to Claim 2, **characterized in that** the cut edges (S1, S2) are ascertained aboard a support system of the camera (2).

4. Method according to Claim 3, **characterized in that** the photographs' data reduced by means of the cut edges (S1, S2) are transmitted to a control centre in real time.

5. Apparatus (1) for ascertaining the cut edges (S1, S2) of two overlapping photographs of a surface (OF), comprising at least one camera (2) having a sensor (6) in matrix form that has n rows (7), a position and orientation measuring system (3), an evaluation unit (4) and a memory (5), wherein the memory (5) stores a height model (H) of the surface (OF) and a projection model (P) of the camera (2) that are able to be accessed by the evaluation unit (4), wherein for each picture element of a photograph taken with a camera the projection model of this camera can describe the solid angle of said picture element and, for any spatial world point, the associated picture element on the sensor surface, wherein the height model describes a height for each coordinate, so that for each coordinate it is possible for both the height and, for any ray in the space, a point of intersection with the height model to be ascertained as a spatial point, wherein the apparatus (1) is designed such that the position and orientation measuring system (3) is used to ascertain the camera position (P1, P2) of the at least one camera (2) for the first and second photographs, wherein a horizontal midpoint (M) between the two camera positions (P1, P2) is ascertained and a perpendicular projection of the midpoint (M) onto the surface (OF) is performed while taking into consideration the height model (H), wherein for the point (M0) thus ascertained the projection model (P) is used to perform a backprojection onto the sensor (6) in the first and second camera positions (P1, P2) and a respective picture element (BP1M0, BP2M0) is ascertained, wherein the respective row (7.Z1M0, 7.Z2M0) of the sensor (6) in which the respective picture element (BP1M0, BP2MO) is located is ascertained, wherein four solid angles (RW1-RW4) of the respective first and last picture elements (Pix1-Pix4) of the respective determined rows (7.Z1M0, 7.Z2M0) of the sensor (6) are determined by using the projection model (P) and the points of intersection (SP1-SP4) of said solid angles with the height model (H) between the two points of intersection (SP1, SP3; SP2, SP4) for the first picture elements (Pix1, Pix3) of the rows (7.Z1MO, 7.Z2MO) and the last picture elements (Pix2, Pix4) of the rows (7.Z1MO, 7.Z2MO) are determined, wherein two picture elements (BP1M1, BP1M2) of the two midpoints (M1, M2) in the sensor (6) for the first camera position (P1) and two picture elements (BP2M1, BP2M2) of the two midpoints (M1, M2) in the sensor (6) for the second camera position (P2) are ascertained by means of the projection model (P) and associated rows (7.Z1M1, 7.Z1M2) of the picture elements (BP1M1, BP1M2) for the camera position (P1) and associated rows (7.Z2M1, 7.Z2M2) of the picture elements (BP2M1, BP2M2) of the two midpoints (M1, M2) for the camera position (P2) are determined, wherein for the first camera position (P1) the smallest ascertained row in respect of the row number MINI, where MINI is the minimum from Z1M0, Z1M1, Z1M2, and for the second camera position (P2) the largest ascertained row in respect of the row number MAX2, where MAX2 is the maximum from Z2M0, Z2M1, Z2M2, are chosen as a cut edge (S1, S2).

## Revendications

1. Procédé de détermination des arêtes de coupe (S1, S2) de deux prises d'image se chevauchant d'une surface (OF), dans lequel les prises d'image sont effectuées au moyen d'au moins une caméra (2), dans lequel ladite au moins une caméra (2) comporte un capteur en forme de matrice (6) à n lignes (7), dans lequel une arête de coupe représente une ligne du capteur en forme de matrice, dans lequel des données de lignes situées au-dessus ou en dessous de l'arête de coupe sont rejetées comme étant redondantes, comprenant les étapes de procédé suivantes :
- déterminer, au moyen d'un système de mesure de position et d'orientation (3), les positions de caméra (P1, P2) de ladite au moins une caméra (2) lors des première et seconde prises d'image,
- déterminer un point central horizontal (M) entre les deux positions de caméra (P1, P2) et effectuer une projection verticale de ce point central (M) sur la surface (OF) en tenant compte d'un modèle de hauteur (H) de la surface (OF) préalablement stocké, de manière à déterminer un point (M0), dans lequel le modèle de hauteur décrit une hauteur pour chaque coordonnée, de manière à ce que, pour chaque coordonnée, il soit possible de déterminer à la fois la hauteur et, pour tout rayon dans l'espace, un point d'intersection avec le modèle de hauteur en tant que point spatial,
- déterminer, au moyen d'un modèle de projection (P) de ladite au moins une caméra (2), les pixels (BP1M0, BP2M0) du point (M0) dans le capteur (6) pour la première position de caméra (P1) et la seconde position de caméra (P2), en tenant compte des données du système de mesure de position et d'orientation (3), dans lequel le modèle de projection d'une caméra peut décrire l'angle solide pour chaque pixel d'une prise d'image effectuée avec cette caméra et peut également décrire le pixel correspondant sur la surface du capteur pour tout point global de l'espace,
- déterminer la ligne (7.Z1M0, 7.Z2M0) respective du capteur (6) sur laquelle est situé le pixel (BP1M0, BP2M0) respectif,
- déterminer les quatre angles solides (RW1-RW4) des premier et dernier pixels (Pix1, Pix2 ; Pix3, Pix4) de la ligne (7.Z1M0, 7.Z2M0) respectivement déterminée du capteur (6) à l'aide du modèle de projection (P) et déterminer les quatre points d'intersection (SP1-SP4) des quatre angles solides (RW1-RW4) avec le modèle de hauteur (H),
- déterminer le point central horizontal (M1) en tenant compte du modèle de hauteur (H) entre les deux points d'intersection (SP1, SP3) pour les premiers pixels (Pix1, Pix3) des lignes (7.Z1MO, 7.Z2MO) et déterminer le point central horizontal (M2) en tenant compte du modèle de hauteur (H) entre les deux points d'intersection (SP2, SP4) pour les derniers pixels (Pix2, Pix4) des lignes (7.Z1MO, 7.Z2MO),
- déterminer, au moyen du modèle de projection (P), les deux pixels (BP1M1, BP1M2) des deux points centraux (M1, M2) dans le capteur (6) pour la première position de caméra (P1) et les deux pixels (BP2M1, BP2M2) dans le capteur (6) pour la seconde position de caméra (P2),
- déterminer les lignes (7.Z1M1 ; 7.Z1M2) et (7.Z2M1, 7.Z2M2) associées des pixels (BP1M1, BP1M2) et (BP2M1, BP2M2) des deux points centraux (M1, M2),
dans lequel, pour la première position de caméra (P1), la plus petite ligne déterminée par rapport au numéro de ligne MIN1, MIN1 étant le minimum de Z1M0, Z1M1, Z1M2, et, pour la seconde position de caméra (P2), la plus grande ligne déterminée par rapport au numéro de ligne MAX2, MAX2 étant le maximum de Z2M0, Z2M1, Z2M2, forment les arêtes de coupe (S1, S2).

2. Procédé selon la revendication 1, **caractérisé en ce que** les deux prises d'image sont effectuées de manière décalée dans le temps par une caméra (2).

3. Procédé selon la revendication 2, **caractérisé en ce que** la détermination des arêtes de coupe (S1, S2) est effectuée à bord d'un système de support de la caméra (2) .

4. Procédé selon la revendication 3, **caractérisé en ce que** les données des prises d'image réduites au moyen des arêtes de coupe (S1, S2) sont transmises en temps réel à un poste central.

5. Dispositif (1) de détermination des arêtes de coupe (S1, S2) de deux prises d'image se chevauchant d'une surface (OF), comprenant au moins une caméra (2) avec un capteur (6) en forme de matrice, qui comporte n lignes (7), un système de mesure de position et d'orientation (3), une unité d'évaluation (4) et une mémoire (5), dans lequel un modèle de hauteur (H) de la surface (OF) et un modèle de projection (P) de la caméra (2), auquel l'unité d'évaluation (4) peut accéder, sont stockés dans la mémoire (5), dans lequel le modèle de projection d'une caméra peut décrire l'angle solide pour chaque pixel d'une prise d'image effectuée avec cette caméra et peut également décrire le pixel correspondant sur la surface du capteur pour tout point global de l'espace, dans lequel le modèle de hauteur décrit une hauteur pour chaque coordonnée, de manière à ce que, pour chaque coordonnée, il soit possible de déterminer à la fois la hauteur et, pour tout rayon dans l'espace, un point d'intersection avec le modèle de hauteur en tant que point spatial, dans lequel le dispositif (1) est conçu de manière à déterminer, au moyen du système de mesure de position et d'orientation (3), la position de caméra (P1, P2) de ladite au moins une caméra (2) lors des première et deuxième prises d'image, dans lequel un point central horizontal (M) entre les deux positions de caméra (P1, P2) est déterminé et une projection verticale du point central (M) sur la surface (OF) est effectuée en tenant compte du modèle de hauteur (H), dans lequel, pour le point (M0) ainsi déterminé au moyen du modèle de projection (P), une rétroprojection est effectuée sur le capteur (6) dans les première et seconde positions (P1, P2) de la caméra et un pixel (BP1M0, BP2M0) est respectivement déterminé, dans lequel la ligne (7.Z1M0, 7.Z2M0) respective du capteur (6) sur laquelle est situé le pixel (BP1MO, BP2MO) respectif est déterminée, dans lequel quatre angles solides (RW1-RW4) des premier et dernier pixels (Pix1-Pix4) des lignes (7.Z1M0, 7.Z2M0) respectivement déterminées du capteur (6) sont déterminés à l'aide du modèle de projection (P) et leurs points d'intersection (SP1-SP4) avec le modèle de hauteur (H) entre les deux points d'intersection (SP1, SP3 ; SP2, SP4) sont déterminés pour les premiers pixels (Pix1, Pix3) des lignes (7.Z1M0, 7.Z2M0) et les derniers pixels (Pix2, Pix4) des lignes (7.Z1M0, 7.Z2M0), dans lequel deux pixels (BP1M1, BP1M2) des deux points centraux (M1, M2) dans le capteur (6) pour la première position de caméra (P1) et deux pixels (BP2M1, BP2M2) des deux points centraux (M1, M2) dans le capteur (6) pour la seconde position de caméra (P2) sont déterminés au moyen du modèle de projection (P) et des lignes (7.Z1M1, 7.Z1M2) correspondantes des pixels (BP1M1, BP1M2) pour la position de caméra (P1) et les lignes (7.Z2M1, 7.Z2M2) correspondantes des pixels (BP2M1, BP2M2) des deux points centraux (M1, M2) pour la position de la caméra (P2), sont déterminées, dans lequel, pour la première position de caméra (P1), la plus petite ligne déterminée par rapport au numéro de ligne MIN1, MIN1 étant le minimum de Z1M0, Z1M1, Z1M2, et, pour la seconde position de caméra (P2), la plus grande ligne déterminée par rapport au numéro de ligne MAX2, MAX2 étant le maximum de Z2M0, Z2M1, Z2M2, sont sélectionnées en tant qu'arête de coupe (S1, S2).
